# EUROPEAN PATENT APPLICATION

(11) **EP 2 166 370 A1**
(43) Date of publication of application: **24.03.2010**
(21) Application number: 09168780.6
(22) Date of filing: 27.08.2009
(51) Int. Cl.: G01S 1/00

(54) **Method and apparatus for sharing information between GPS engines in mobile terminal**

(30) Priority: 17.09.2008 KR 20080090985
(71) Applicant: Samsung Electronics Co., Ltd., Suwon-si, Gyeonggi-do (KR)
(72) Inventor: Kim, Yong-Sik, Gyeonggi-do (KR)
(74) Representative: Boakes, Jason Carrington

(57) **Abstract**

A mobile terminal and method for sharing Global Positioning System (GPS) information is provided. The mobile terminal includes a first GPS engine and a GPS driver. The first GPS engine updates GPS information. The GPS driver stores the GPS information updated by the first GPS engine, and when the first GPS engine changes to a second GPS engine, provides the stored GPS information to the second GPS engine. Since GPS information is shared between GPS engines in the mobile terminal which uses the plurality of GPS engines, in the case where one of the GPS engines is selectively used for a GPS operation, warm start or hot start may be performed as much as possible.

## Description

### BACKGROUND OF THE INVENTION

### 1. Field of the Invention:

The present invention relates to a mobile terminal that can perform a Global Positioning System (GPS) reception operation. More particularly, the present invention relates to an apparatus and a method for allowing GPS information to be shared between GPS engines in a mobile terminal having a plurality of GPS engines for a GPS reception operation.

### 2. Description of the Related Art:

A Global Positioning System (GPS) denotes a position measurement system that can determine the position of a still or moving object anywhere on Earth by receiving information transmitted from satellites.

Currently, the GPS is applied to provide not only simple position information but also a wide range of functions including navigation and traffic control of airplanes, ships, and cars, precise surveying of large-scale public works, and cartography. In addition, a module for performing the GPS operation (referred to as a 'GPS' module hereinafter) also has been improved.

The GPS module determines a coordinate by processing satellite signals for the GPS operation. At this point, the GPS module may determine a coordinate faster through a 'hot start' or 'warm start' process that uses previously stored GPS information. Here, the GPS information includes time, position, almanac, and ephemeris. During the GPS operation, the GPS module updates and stores the GPS information. However, in the case where the GPS module cannot use the previously stored GPS information, the GPS module performs a 'cold start' process that takes a certain amount of time.

Recently, a composite terminal having more than one GPS module is being produced in large quantities. However, in such a terminal having a plurality of GPS modules, information is not shared between engines of the GPS modules.
Accordingly, in the case where up-to-date GPS information allowing hot start or warm start cannot be shared between respective GPS modules, a GPS module which has not obtained the up-to-date GPS information must operate in the 'cold start', causing additional start-up time and thus inconvenience to a user.

### SUMMARY OF THE INVENTION

An aspect of the present invention is to address at least the above-mentioned problems and/or disadvantages and to provide at least the advantages described below. Accordingly, an aspect of the present invention is to provide an apparatus and a method for allowing Global Positioning System (GPS) information to be shared between respective GPS engines in a mobile terminal that uses a plurality of GPS engines.

Another aspect of the present invention is to provide an apparatus and a method for addressing a user's inconvenience by preferentially having warm start or hot start performed regardless of which GPS engine is used by a mobile terminal that uses a plurality of GPS engines.

In accordance with an aspect of the present invention, a mobile terminal is provided. The mobile terminal includes a first GPS engine for updating GPS information, and a GPS driver for storing the GPS information updated by the first GPS engine, and when the first GPS engine changes to a second GPS engine, providing the stored GPS information to the second GPS engine.

In accordance with another aspect of the present invention, a method for sharing GPS information between GPS engines in a mobile terminal is provided. The method includes updating, by a first GPS engine, the GPS information, storing the updated GPS information, and, when the first GPS engine changes to a second GPS engine, allowing the second GPS engine to receive the stored GPS information and operate.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a block diagram illustrating a mobile terminal including a plurality of Global Positioning System (GPS) engines according to an exemplary embodiment of the present invention;

FIG. 2 is a flowchart illustrating a procedure of obtaining GPS information to be shared by GPS engines according to an exemplary embodiment of the present invention; and

FIG. 3 is a flowchart illustrating a procedure of performing a GPS operation according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawing is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a", "an", and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

Exemplary embodiments of the present invention will be described herein below with reference to the accompanying drawings. In the following description, well-known functions or constructions are not described in detail since they would obscure the invention in unnecessary detail.

Exemplary embodiments of the present invention provide a technique for allowing Global Positioning System (GPS) information to be shared between respective GPS engines in a mobile terminal which uses at least two GPS engines for performing GPS operations.

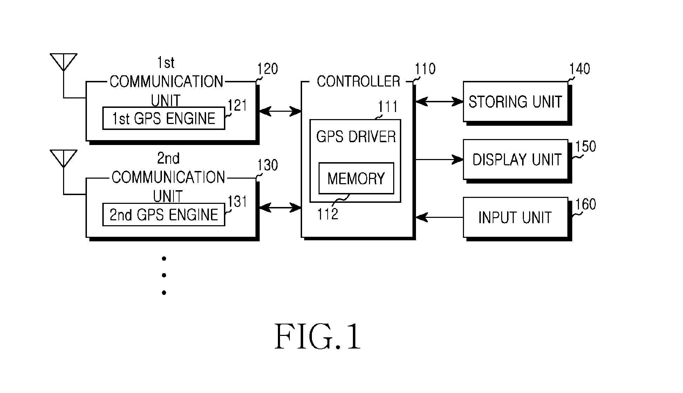

FIG. 1 is a block diagram illustrating a mobile terminal including a plurality of GPS engines according to an exemplary embodiment of the present invention.

Referring to FIG. 1, the mobile terminal may perform mobile communication and provide a positioning service by receiving GPS signals. In addition, the mobile terminal includes at least two communication units which may process a relevant Radio Frequency (RF) band in order to perform the mobile communication. For example, first and second communication units 120 and 130 may process relevant frequency communication bands of Global System for Mobile telecommunication (GSM), a Digital Cell System (DCS), and a Personal Communication Service (PCS). In addition, the first and second communication units 120 and 130 include first and second GPS engines 121 and 131, respectively, which may perform GPS reception (referred to as a 'GPS operation' hereinafter) in relevant RF communication bands, respectively.

More particularly, each communication unit 120 and 130 may be selectively used. At this point, for the GPS operation, only a GPS engine included in the selected communication unit may be used. Consequently, when a user selects a different communication unit so that the relevant communication unit changes, the GPS engine also changes. For example, in the case where the mobile terminal performs a handover from a first communication unit 120 for processing a GSM frequency communication band to a second communication unit 130 for processing a PCS frequency communication band, the GPS engine 131 of the second communication unit 130, rather than the GPS engine 121 of the first communication unit 120, may perform the GPS operation.

Furthermore, the first and second communication units 120 and 130, and the first and second GPS engines 121 and 131 may include antennas for transmitting/receiving relevant RF signals, respectively.

Therefore, even when a user selectively uses one of the first and second communication units 120 and 130, the user can perform a GPS operation anytime using a relevant GPS engine included in the selected communication unit.

In the following description of FIG. 1, each element will be described in consideration of the GPS operation. Referring to FIG. 1, a controller 110 controls overall operations of the mobile terminal. The controller 110 may selectively control first communication unit 120 and the second communication unit 130 in order to execute a mobile communication function and a GPS receiving function. In addition, the controller 110 includes a GPS driver 111. The GPS driver 111 allows elements such as the first and second GPS engines 121 and 131, a storing unit 140, a display unit 150, and an input unit 160 to cooperate with one another. For example, the GPS driver 111 may control a navigation program stored in the storing unit 140 to cooperate with the first and second GPS engines 121 and 131.

The GPS driver 111 may include a memory 112. The memory 112 may store information for allowing the first and second GPS engines 121 and 131 to cooperate with various elements. More particularly, the GPS driver 111 may obtain GPS information updated by the first and second GPS engines 121 and 131 during operation, and store the information in the memory 112. In an alternative embodiment, the GPS driver 111 may store the information in the separate storing unit 140. Preferably, when a relevant GPS engine requests the GPS information for hot start or warm start, the GPS driver 111 provides recently updated and stored GPS information.

The GPS engine 121 (131) determines a coordinate by processing satellite signals input via the antenna. The GPS engine 121 (131) stores various programs for determining the coordinate. As described above, the GPS engine 121 (131) requires GPS information to perform hot start or warm start. The GPS information includes time, position, almanac, ephemeris, and the like which are elements for determining the coordinate. Furthermore, the GPS information is updated by the GPS engine 121 (131) during the GPS operation. At this point, the GPS driver 111 obtains the updated GPS information from the GPS engine 121 (131), and stores the obtained GPS information.

As described above, the GPS engine may be changed by selective use of the communication unit. In an exemplary implementation, the changed GPS engine requests GPS information, updated by a different GPS engine before the change, from the GPS driver 111 which stores the updated GPS information, and obtains the updated GPS information. At this point, when the obtained GPS information is valid, the changed GPS engine performs hot start or warm start. On the other hand, when there is no GPS information or the GPS information is invalid, the changed GPS engine performs cold start. After that, GPS information updated by the changed GPS engine during the GPS operation is stored by the GPS driver 111 until the GPS operation of the changed GPS engine terminates or the GPS engine changes to a different GPS engine.

The storing unit 140 stores programs for controlling general operations of the mobile terminal. In addition, the storing unit 140 temporarily stores data generated while the programs are executed. For example, the storing unit 140 may store GPS information of the GPS engines 121 and 131.

The display unit 150 displays a position determined by the GPS engine 121 (131), a current time, a reception state of a satellite signal and the like.

The input unit 160 generates various input data associated with operation of the mobile terminal including the GPS operation.

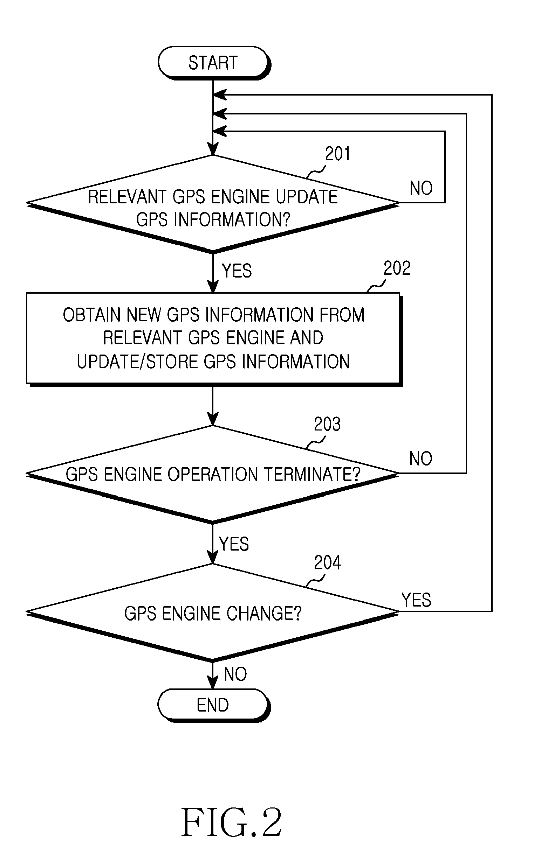

FIG. 2 is a flowchart illustrating a procedure of obtaining GPS information to be shared by GPS engines according to an exemplary embodiment of the present invention.

Referring to FIG. 2, in step 201, the GPS driver 111 determines whether a relevant GPS engine updates GPS information during a GPS operation. As described with reference to FIG. 1, one of the first GPS engine 121 and the second GPS engine 131 is selectively used as the relevant GPS engine. This also indicates that a GPS engine for the GPS operation is changed as a result of a change in the use of the respective communication units 120 and 130.

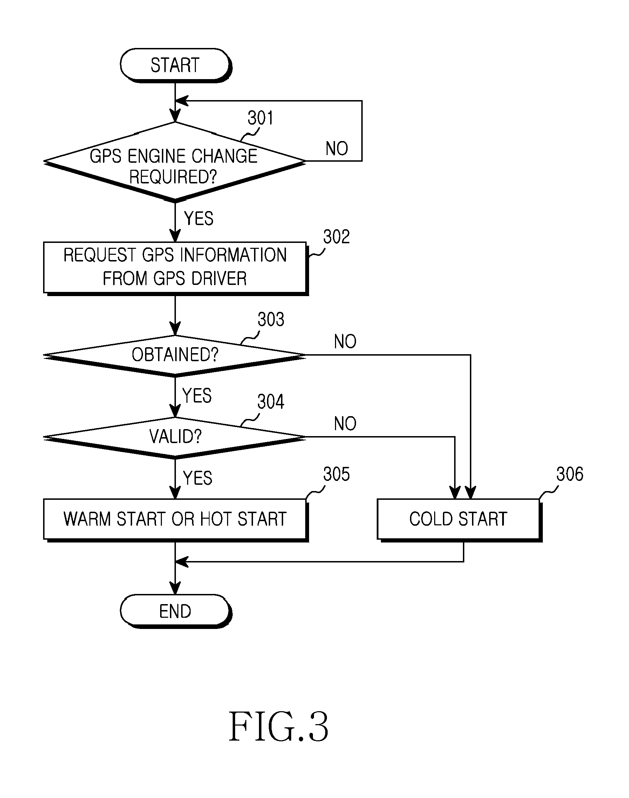

In addition, in step 201, the GPS operation of the relevant GPS engine is performed in the form of a warm start, hot start, or cold start. More specifically, the GPS operation includes a case of performing the GPS operation using a cold start process wherein, at an initial state, there is no GPS information that can be used. Furthermore, the GPS operation of the relevant GPS engine in step 201 also includes a case of obtaining GPS information stored by the GPS driver 111 and operating the relevant GPS engine using a warm start or hot start process if the obtained GPS information is valid. The GPS operation in step 201 also includes a case of operating the relevant GPS engine using a cold start process when the obtained GPS information is invalid. A determination of the validity of the GPS information will be described in more detail with reference to FIG. 3.

When the GPS driver 111 determines that the relevant GPS engine updates GPS information during the GPS operation in step 201, the GPS engine obtains the updated GPS information and updates/stores the GPS information in step 202.

In step 203, the GPS driver 111 determines whether the operation of the relevant GPS engine terminates. When the operation of the relevant GPS engine does not terminate in step 203, the GPS driver 111 returns to step 201 and performs subsequent steps.

On the other hand, when the GPS driver 111 determines that the operation of the relevant GPS engine terminates in step 203, the GPS driver 111 determines whether to change the relevant GPS engine to a different GPS engine, and whether a GPS operation should be performed in step 204. In an exemplary implementation, the change from the relevant GPS engine to a different GPS engine means that, in the case where the communication unit performs a handover in order to process a relevant frequency communication band, the GPS engine included in the communication unit should also be changed and a corresponding GPS operation should be performed.

When the GPS driver 111 determines that a change to the different GPS engine is required in step 204, the GPS driver 111 proceeds to step 201 on the changed different GPS engine and performs subsequent steps. On the other hand, when the GPS driver 111 determines that the change to the different GPS engine is not required in step 204, the present exemplary algorithm is ended.

FIG. 3 is a flowchart illustrating a procedure of performing a GPS operation according to an exemplary embodiment of the present invention.

Referring to FIG. 3, it is determined in step 301 if a GPS engine change is required. When a change from one GPS engine in GPS operation to a different GPS engine is required in step 301, the different GPS engine recognizes the need for the change and requests GPS information from the GPS driver 111 in step 302. In an exemplary implementation, a change of the GPS engine indicates that the GPS engine for the GPS operation is changed as a result of a change of the communication unit (e.g., during handover).

After requesting the GPS information from the GPS driver in step 302, the changed GPS engine determines if it obtains the GPS information from the GPS driver 111 in step 303. If it is determined that the GPS information is obtained from the GPS driver in step 303, the GPS engine determines whether the obtained GPS information is valid in step 304. Here, determining the validity of the GPS information may include determining if a time elapsed since use of the obtained GPS information (time, position, almanac, ephemeris and the like) does not exceed a valid duration, determining a valid distance range and the like. On the other hand, when the changed GPS engine does not obtain GPS information from the GPS driver 111 in step 303, the GPS engine performs cold start in step 306.

When it is determined in step 304 that the GPS information obtained by the changed GPS engine is valid, the changed GPS engine performs warm start or hot start in step 305. For example, when the GPS information obtained from the GPS driver is information that is one hour old or less, the changed GPS engine may perform a fast start GPS operation by effectively using the GPS information when determining a coordinate.

On the other hand, when the changed GPS engine determines the GPS information obtained from the GPS driver 111 is invalid as a result of the determination in step 304, the GPS engine performs cold start in step 306. For example, when the GPS information obtained from the GPS driver is information obtained one month ago, the changed GPS engine determines the GPS information is not valid and determines a position coordinate using only recently received satellite signals.

After that, the changed GPS engine ends the present exemplary algorithm for the GPS operation.

As described above, since GPS information is shared between GPS engines in a mobile terminal which uses a plurality of GPS engines, in the case where one of the GPS engines is selectively used for a GPS operation, warm start or hot start may be performed as often as possible.

While the invention has been shown and described with reference to certain exemplary embodiments thereof, it will be understood by those skilled in the art that various changes in form and details may be made therein without departing from the spirit and scope of the invention as defined by the appended claims and their equivalents

## Claims

1. A mobile terminal, the terminal comprising:
a first Global Positioning System (GPS) engine for updating GPS information; and
a GPS driver for controlling storage of the GPS information updated by the first GPS engine, and for providing the stored GPS information to a second GPS engine when the first GPS engine changes to the second GPS engine.

2. The terminal of claim 1, wherein the changing of the first GPS engine to the second GPS engine is performed when a first communication scheme changes to a second communication scheme.

3. The terminal of claim 1, wherein the second GPS engine, which has received the stored GPS information, determines whether the provided GPS information is valid, performs one of a warm start process and a hot start process when the provided GPS information is valid, and performs a cold start process when the provided GPS information is invalid.

4. The terminal of claim 1, wherein the GPS driver controls storage of the GPS information in at least one of a local memory and a separate storing unit.

5. The terminal of claim 1, wherein the GPS information comprises at least one of time, position, almanac, and ephemeris.

6. A method for sharing Global Positioning System (GPS) information between GPS engines in a mobile terminal, the method comprising:
updating, by a first GPS engine, GPS information;
storing the updated GPS information; and
accessing the stored GPS information by a second GPS engine when the first GPS engine changes to the second GPS engine.

7. The method of claim 6, wherein the changing of the first GPS engine to the second GPS engine comprises changing a first communication scheme to a second communication scheme.

8. The method of claim 6, further comprising:
determining whether the stored GPS information accessed by the second GPS engine is valid;
performing one of a warm start process and a hot start process when the provided GPS information is valid; and
performing a cold start process when the provided GPS information is invalid.

9. The method of claim 6, wherein the GPS information comprises at least one of time, position, almanac, and ephemeris.

10. The method of claim 8, wherein the determining of whether the stored GPS information accessed by the second GPS engine is valid comprises at least one of determining if the age of the stored information is less than a first threshold and determining if a distance between a location indicated by the stored information and a current location is less than a second threshold.
